# EUROPEAN PATENT APPLICATION

(11) **EP 4 819 034 A1**
(43) Date of publication of application: **07.10.2026**
(21) Application number: 24918962.2
(22) Date of filing: 26.11.2024
(51) Int. Cl.: G06T 5/77, G06T 7/30, G06T 7/50, G06V 10/74

(54) **ELECTRONIC DEVICE FOR PERFORMING VIDEO INPAINTING AND OPERATION METHOD THEREOF**

(30) Priority: 18.01.2024 KR 20240008295
(71) Applicant: Samsung Electronics Co., Ltd., Suwon-si, Gyeonggi-do 16677 (KR)
(72) Inventor: LEE, Sungho, Suwon-si, Gyeonggi-do 16677 (KR); SOH, Jaewoong, Suwon-si, Gyeonggi-do 16677 (KR); HAN, Yelin, Suwon-si, Gyeonggi-do 16677 (KR); YOON, Youngjin, Suwon-si, Gyeonggi-do 16677 (KR); LEE, Yeoul, Suwon-si, Gyeonggi-do 16677 (KR); CHOI, Narae, Suwon-si, Gyeonggi-do 16677 (KR); CHOI, Woongil, Suwon-si, Gyeonggi-do 16677 (KR)
(74) Representative: Gulde & Partner
(86) International application number: PCT/KR2024/018854
(87) International publication number: WO 2025/154935

(57) **Abstract**

Disclosed is a method for inpainting a video by an electronic device. The method may comprise the steps of: extracting an input feature including an image feature and a depth feature on the basis of a first frame to be restored, a mask, and a depth frame; selecting a second frame which is a frame preceding the first frame and associated with the first frame; aligning the input feature of the first frame with an output feature of the second frame on the basis of the depth features of the first frame and the second frame; acquiring an output feature by modifying the image feature on the basis of the depth feature of the aligned input feature; and generating a restored frame on the basis of the output feature.

## Description

### Technical Field

Provided are an electronic device for performing image inpainting for reconstructing an image by filling pixels in the image, and an operation method thereof.

### Background Art

Technology using artificial intelligence is being applied to an image editing function provided by an electronic device. An image inpainting technology may allow reconstruction of an image by filling pixels in a hole region that is a damaged or empty area in the image. When the electronic device performs inpainting, noise such as blurring and distortion may occur in the inpainted image according to characteristics of the hole region. In the field of image inpainting technology, it is intended to present a method capable of naturally inpainting an occlusion region occluded due to an object in an image.

### Disclosure of Invention

### Solution to Problem

According to an aspect of the present disclosure, a method, performed by an electronic device, of inpainting a video may be provided. The method may include extracting an input feature including an image feature and a depth feature based on a first frame to be reconstructed, a mask, and a depth frame. The method may include selecting a second frame that is a frame preceding the first frame and is associated with the first frame. The method may include aligning an input feature of the first frame with an output feature of the second frame based on depth features of the first frame and the second frame. The method may include obtaining an output feature by modifying an image feature based on a depth feature of the aligned input feature. The method may include generating a reconstructed frame based on the output feature.

According to an aspect of the present disclosure, an electronic device performing inpainting may be provided. The electronic device may include: a memory storing one or more instructions; and one or more processors configured to execute the one or more instructions stored in the memory. The one or more processors may be further configured to execute the one or more instructions to extract an input feature including an image feature and a depth feature based on a first frame to be reconstructed, a mask, and a depth frame. The one or more processors may be further configured to execute the one or more instructions to select a second frame that is a frame preceding the first frame and is associated with the first frame. The one or more processors may be further configured to execute the one or more instructions to align an input feature of the first frame with an output feature of the second frame based on depth features of the first frame and the second frame. The one or more processors may be further configured to execute the one or more instructions to obtain an output feature by modifying an image feature based on a depth feature of the aligned input feature. The one or more processors may be further configured to execute the one or more instructions to generate a reconstructed frame based on the output feature.

According to an aspect of the present disclosure, there may be provided a computer-readable recording medium having recorded thereon a program for executing any one of the methods described above and below for performing inpainting provided by an electronic device.

### Brief Description of Drawings

FIG. 1 is a diagram for describing an operation, performed by an electronic device, of inpainting an image, according to an embodiment of the present disclosure.
FIG. 2 is a flowchart illustrating an operation, performed by an electronic device, of inpainting a video, according to an embodiment of the present disclosure.
FIG. 3 is a diagram for describing an image inpainting process performed by an electronic device, according to an embodiment of the present disclosure.
FIG. 4A is a diagram for describing an operation, performed by an electronic device, of inpainting an image, according to an embodiment of the present disclosure.
FIG. 4B is a diagram illustrating a detailed architecture of an inpainting model of the present disclosure.
FIG. 5 is a diagram for describing an operation, performed by an electronic device, of aligning a current frame with reference to a previous frame, according to an embodiment of the present disclosure.
FIG. 6 is a diagram for describing an operation, performed by an electronic device, of aligning a current frame with reference to a previous frame, according to an embodiment of the present disclosure.
FIG. 7 is a diagram illustrating an operation, performed by an electronic device, of inpainting an image, according to an embodiment of the present disclosure.
FIG. 8 is a diagram for describing a depth feature generated by an electronic device, according to an embodiment of the present disclosure.
FIG. 9 is a diagram for describing an operation, performed by an electronic device, of reconstructing pixel information, according to an embodiment of the present disclosure.
FIG. 10 is a diagram for describing an operation, performed by an electronic device, of inpainting an image, according to an embodiment of the present disclosure.
FIG. 11 is a diagram for describing an operation, performed by an electronic device, of generating training data, according to an embodiment of the present disclosure.
FIG. 12 is a diagram for describing an embodiment in which an electronic device performs an inpainting task, according to an embodiment of the present disclosure.
FIG. 13 is a diagram for describing an embodiment in which an electronic apparatus according to an embodiment of the present disclosure performs an inpainting task.
FIG. 14 is a block diagram illustrating a configuration of an electronic device according to an embodiment of the present disclosure.
FIG. 15 is a block diagram illustrating a configuration of a server according to an embodiment of the present disclosure.

### Mode for the Invention

Terms used in the present specification will be briefly described, and the present disclosure will be described in detail. The terms used in the present disclosure have been selected as currently widely used general terms as possible while considering the functions in the present disclosure, but these may vary depending on the intention of those skilled in the art, precedents, the emergence of new technologies, and the like. In addition, in certain cases, there are terms arbitrarily selected by the applicant, and in this case, the meaning will be described in detail in the corresponding description. Therefore, the terms used in the present disclosure should be defined based on the meaning of the terms and the contents throughout the present disclosure, rather than simple names of the terms.

A singular expression may include a plural expression unless the context clearly indicates otherwise. The terms used herein, including technical or scientific terms, may have the same meanings as those generally understood by those skilled in the art. In addition, terms including ordinal numbers such as "first" or "second" used herein may be used to describe various components, but the components should not be limited by the terms. The terms are used only for the purpose of distinguishing one component from another component.

Throughout the specification, when a part "includes" a certain component, this means that other components may be further included, rather than excluding other components, unless otherwise stated. In addition, terms such as "unit" and "module" described in the specification mean a unit for processing at least one function or operation, and may be implemented in hardware or software, or a combination of hardware and software.

Hereinafter, embodiments of the present disclosure will be described in detail with reference to the accompanying drawings so that those skilled in the art may easily carry out the present disclosure. However, the present disclosure may be implemented in various different forms and is not limited to the embodiments described herein. In addition, in order to clearly describe the present disclosure in the drawings, parts irrelevant to the description are omitted, and similar reference numerals are assigned to similar parts throughout the specification.

Hereinafter, the present disclosure will be described with reference to the accompanying drawings.

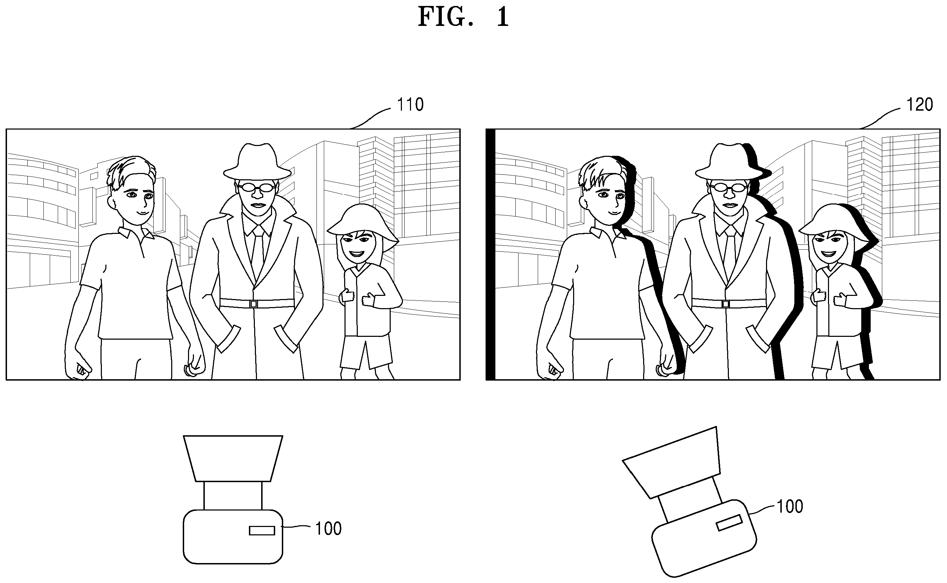

FIG. 1 is a diagram for describing an operation, performed by an electronic device, of inpainting an image, according to an embodiment of the present disclosure.

The electronic device according to an embodiment may be a device capable of reproducing an image and/or a video. For example, the electronic device may be a device, such as a smartphone, a tablet personal computer (PC), a notebook PC, a desktop PC, a television (TV), or a head-mounted display (HMD), but is not limited thereto.

In an embodiment, the electronic device may perform an image or video inpainting task. Inpainting refers to an operation of generating and filling pixels in a hole region of an image with respect to the image including the hole region in which pixel information is not present. When the electronic device reconstructs the hole region of the image, the electronic device may reconstruct the image based on the peripheral pixels of the hole region for natural reconstruction that matches the context of the image.

In an embodiment, the inpainting task of the electronic device may be included in various types of image processing tasks. For example, the electronic device may utilize inpainting when synthesizing an image or video of a new viewpoint.

Referring to FIG. 1, an electronic device may transform an original image 110 into a new image 120. In the example of FIG. 1, the original image 110 is an image in which a camera 100 views a scene from a first viewpoint, and the new image 120 is an image in which the camera 100 views the scene from a second viewpoint.

In order for the electronic device to transform the original image 110 into the new image 120, a depth of the original image 110 is estimated, and objects and a background in the original image 110 need to be moved based on depth information. As a result, in the new image 120, an occlusion region that has been occluded by the object at the viewpoint of the original image 110 may exist. That is, the occlusion region is a hole region where pixel information does not exist. The electronic device may perform an inpainting task of filling pixels in the hole region to make the new image 120 a complete image. In this case, as the hole region filled in the inpainting process is an occlusion area representing a rear portion of the object, the electronic device may fill the pixel by referring only to information behind the object. To this end, the inpainting applied in the present disclosure may be inpainting that is natural with a surrounding context by using depth information.

In an embodiment, the electronic device may transform a mono image (or video) into a stereo image (or video). For example, the electronic device may provide a user with 3D content including the original image 110 and the new image 120 by setting the original image 110 as a left-eye image and setting the new image 120 as a right-eye image. In this case, when generating the new image 120, the electronic device may perform an inpainting task of filling the hole region generated due to the viewpoint change of the image.

Specific operations of the electronic device performing the inpainting task will be described in more detail with reference to the drawings and descriptions thereof provided later.

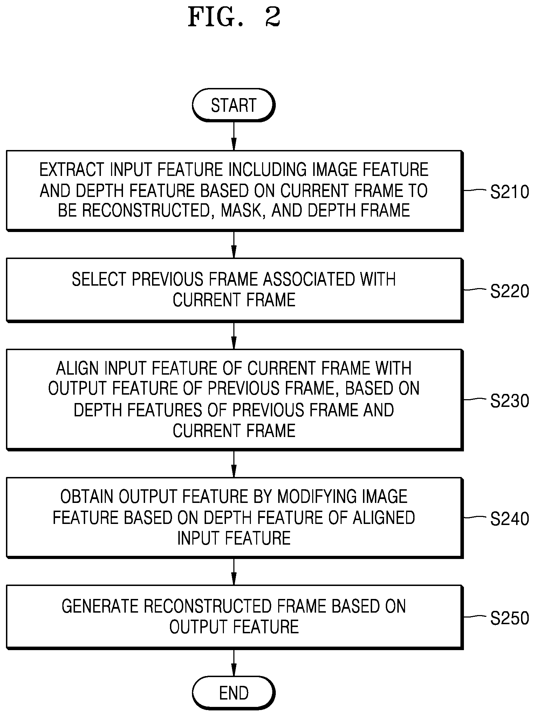

FIG. 2 is a flowchart illustrating an operation, performed by an electronic device, of inpainting a video, according to an embodiment of the present disclosure.

In operation S210, the electronic device may extract an input feature including an image feature and a depth feature based on a current frame to be reconstructed, a mask, and a depth frame.

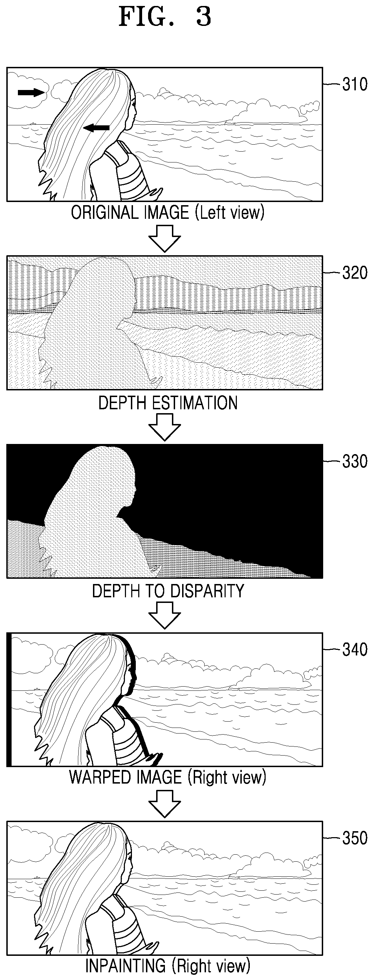

In an embodiment, the electronic device may generate a current frame to be reconstructed, a mask, and a depth frame. The current frame to be reconstructed may refer to an image in which a specific area in the image is reconstructed by an inpainting process performed by the electronic device. The current frame to be reconstructed may be an image including a hole region having no pixel information. The mask may include binary information indicating a hole region that is a target reconstruction area. The depth frame may include depth information about an object, a background, and the like included in the frame to be reconstructed. An operation in which the electronic device generates the current frame to be reconstructed, the mask, and the depth frame will be further described with reference to FIG. 3.

In an embodiment, the electronic device may extract an image feature including pixel information by using the current frame to be reconstructed and the mask. The electronic device may extract an image feature by using an image encoder. The image encoder may receive a frame (image) and a mask and output an image feature generated by reconstructing or transforming the input data. The image feature may be a feature map having a multi-dimensional form, but is not limited thereto.

In an embodiment, the electronic device may extract a depth feature including depth information by using the current frame to be reconstructed, the mask, and the depth frame. The electronic device may extract a depth feature by using a depth encoder. The depth encoder may receive a frame (image), a mask, and a depth frame (depth image), and output a depth feature by reconstructing and/or transforming the input data. The depth feature may be a feature map having a form of a multi-dimensional array, but is not limited thereto.

The electronic device may generate an input feature by concatenating the image feature and the depth feature. In this case, the input feature includes the image feature and the depth feature.

In operation S220, the electronic device may select a previous frame associated with the current frame.

In an embodiment, the previous frame associated with the current frame may be a frame temporally associated with the current frame. For example, a previous frame may be Ft-1 that is a frame immediately before a current frame Ft. Alternatively, the previous frame may be Ft-n that is a frame preceding the current frame by a predetermined number.

In an embodiment, the electronic device may select a previous frame based on a similarity to the current frame. As the previous frame is a frame that may be referenced to inpaint the current frame, the electronic device may select a previous frame having a similarity with the current frame equal to or greater than a predetermined value, as a frame associated with the current frame.

In operation S230, the electronic device may align the input feature of the current frame with the output feature of the previous frame, based on the depth features of the previous frame and the current frame.

In an embodiment, the electronic device may obtain an output feature including pixel information inpainted by processing the input feature for each of the frames of the video. In other words, the output feature of the previous frame may be generated as a result of inpainting of the previous frame. The output feature of the previous frame may include an image feature and a depth feature. The electronic device may use an output feature corresponding to the previous frame in an inpainting process of the current frame in order to naturally connect the current frame to the previous frames.

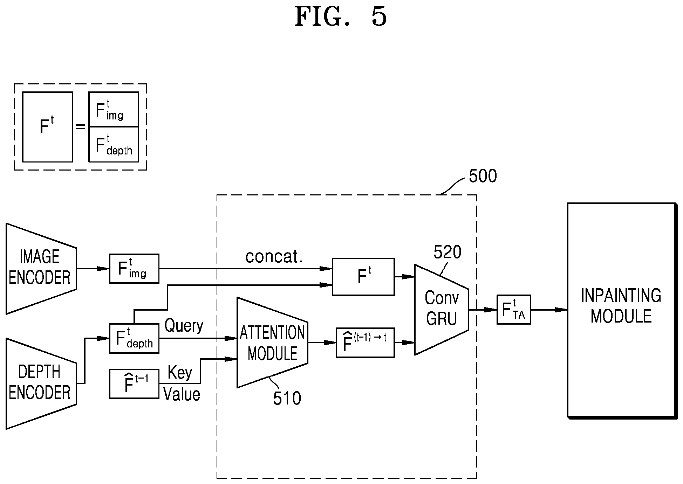

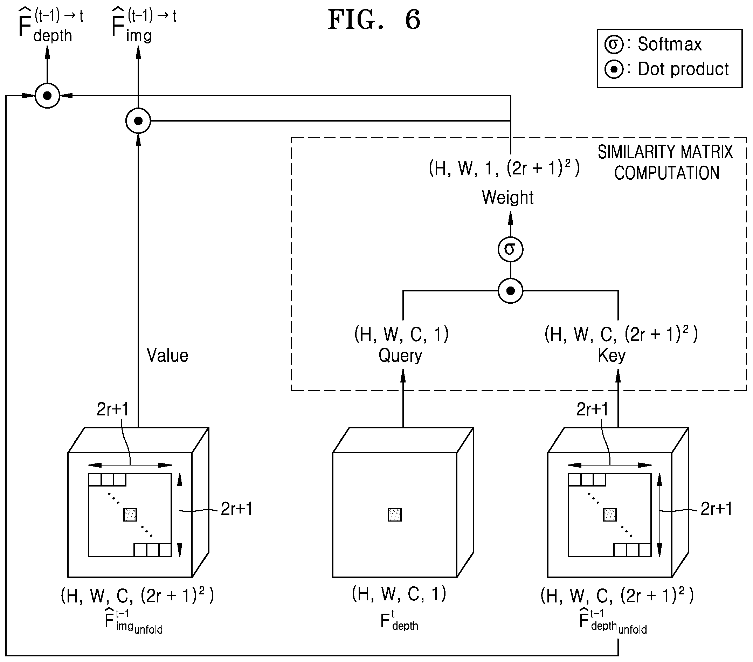

An operation in which the electronic device aligns the current frame with reference to the previous frame will be further described with reference to FIGS. 5 and 6.

In operation S240, the electronic device may obtain an output feature by modifying the image feature based on the depth feature of the aligned input feature.

In an embodiment, the aligned input feature may include a depth feature and an image feature. In this case, the depth feature may include depth information that reconstructs a hole region corresponding to the mask in the depth frame. In other words, as the depth feature includes depth information that reconstructs the hole region, when the depth frame is reconstructed by inputting the depth feature to a depth decoder, a depth frame in which the hole region is filled may be generated.

The electronic device may modify the image feature using the depth feature including the reconstructed depth information. The electronic device may calculate a similarity between depth information of a specific pixel and depth information of peripheral pixels, with respect to the depth feature of the aligned input feature, and may calculate and change a value of the image feature based on the similarity. In this case, the output feature may include a depth feature including the reconstructed depth information and an image feature including the reconstructed pixel information.

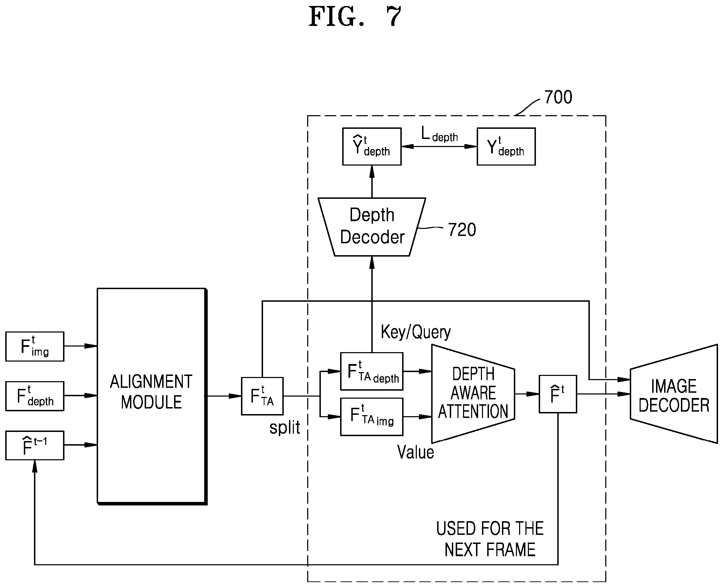

An operation in which the electronic device obtains an output feature by modifying the image feature to include the reconstructed pixel information will be further described with reference to FIGS. 7 to 9.

In operation S250, the electronic device may generate a reconstructed frame based on the output feature.

In an embodiment, the image feature included in the output feature may include pixel information that reconstructs the hole region. In this case, when the image frame is reconstructed by inputting the image feature to the image decoder, an image frame with the filled hole region may be obtained.

FIG. 3 is a diagram for describing an image inpainting process performed by an electronic device, according to an embodiment of the present disclosure.

In an embodiment, the electronic device may obtain an original image 310. The original image 310 may be received by the electronic device from an external device (e.g., a server) or may be captured using a camera module included in the electronic device. The electronic device may generate an inpainted image 350 by performing a series of tasks on the original image 310. The inpainted image 350 may be the transformation of a viewpoint of the original image 310. For example, when the original image 310 is an image at a first viewpoint (e.g., a left viewpoint), the inpainted image 350 may be an image at a second viewpoint (e.g., a right viewpoint) different from the first viewpoint.

The electronic device may obtain a depth image 320 by estimating a depth of the original image 310. The electronic device may perform a depth estimation operation using various known algorithms and/or a deep neural network for a depth estimation task, and may obtain the depth image 320. The depth image 320 may include information about the depths and positions of objects. For example, a pixel value may represent depth information, and a high pixel value may represent an object that is farther away from a camera, i.e., a longer distance, whereas a low pixel value may represent a closer distance.

The electronic device may generate a disparity map 330. The disparity map 330 may include disparity information indicating a visual difference between two images. For example, the value of each pixel of the disparity map 330 may indicate a disparity from a pixel to a corresponding pixel in another image. In this case, the larger the disparity, the closer an object is in the two images, and the smaller the disparity, the farther the object is in the two images.

The electronic device may generate the disparity map 330 to be used to transform the viewpoint of the original image 310, using the depth information of the depth image 320. The disparity map 330 may include information about a disparity between the original image 310 and another image, that is, information about in which direction and how much the object and the background need to move in the original image 310, to transform the viewpoint of the original image 310. For example, when the original image 310 is an image at a left viewpoint and an image at a right viewpoint is to be generated, the object in the original image 310 needs to move to the left and the background of the original image 310 needs to move to the right. In addition, as the object is closer than the background in the two images, the distance that the object moves to the left is greater than the distance that the background moves to the right. In this case, the disparity map 330 may include information indicating moving directions and distances of objects and backgrounds in the image.

The electronic device may generate a warped image 340 by using the original image 310 and the disparity map 330. The warped image 340 refers to an image obtained by transforming the shape, size, and direction of the original image 310 or the object based on the disparity map 330.

In an embodiment, the warped image 340 may include an occlusion region caused by the object in the original image 310 as the viewpoint of the original image 310 is transformed. The occlusion region is an area having no pixel information and may be referred to as a hole region. As the warped image 340 includes an area having no pixel information, it may be referred to as an image to be reconstructed. The electronic device may generate a mask including information indicating the hole region.

The electronic device may generate the inpainted image 350. The electronic device may perform an inpaint task of filling pixel information in a hole region having no pixel information in the warped image 340. The electronic device may use depth information when inpainting the warped image 340. In the example of FIG. 3, as a hole region (occlusion area) of the warped image 340 is an area behind the object, when the warped image 340 is reconstructed, pixel information corresponding to the hole region needs to be filled with reference to a background area. Operations in which the electronic device generates the inpainted image 350 based on the image to be reconstructed and the depth information will be described with reference to the following drawings.

In an embodiment, the electronic device may transform a 2D image into a 3D image. Alternatively, the electronic device may transform a 2D video into a 3D video. For example, as illustrated in FIG. 3, the electronic device may generate the inpainted image 350 at a second viewpoint (e.g., a right viewpoint) based on the original image 310 at a first viewpoint (e.g., a left viewpoint). The electronic device may provide a 3D image and/or a 3D video by providing the original image 310 and the inpainted image 350 together.

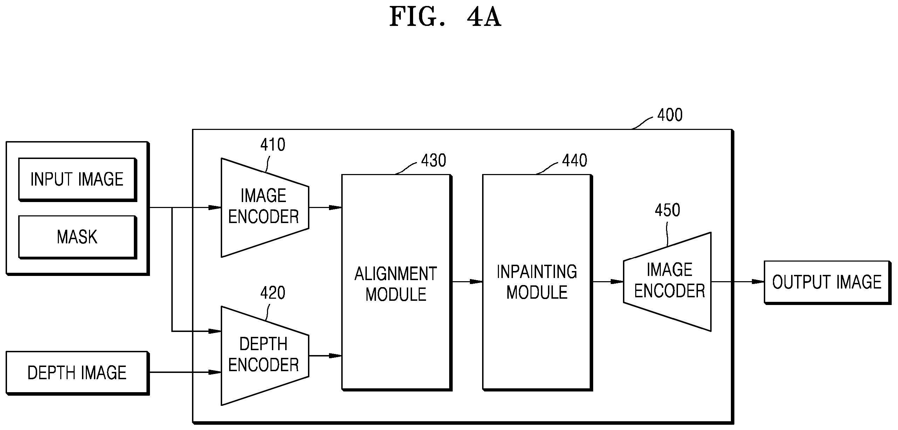

FIG. 4A is a diagram for describing an operation, performed by an electronic device, of inpainting an image, according to an embodiment.

Referring to FIG. 4A, an inpainting model 400 may include at least an image encoder 410, a depth encoder 420, an alignment module 430, an inpainting module 440, and an image decoder 450. The components of the inpainting model 400 may be composed of a combination of a series of codes and data for implementing a specific function. Each of the components may process operations included in a task in which the electronic device inpaints an image and/or a video. The respective components may interact each other while transferring data to each other. A processor of the electronic device may process a task corresponding to each module of the inpainting model 400 by executing an execution code of the inpainting model 400. Hereinafter, the components of the inpainting model 400 will be described.

The image encoder 410 may extract an image feature based on an input frame and a mask. The input frame may be an image including a hole region having no pixel information, and may be referred to as a frame to be reconstructed. The mask may include information about the hole region.

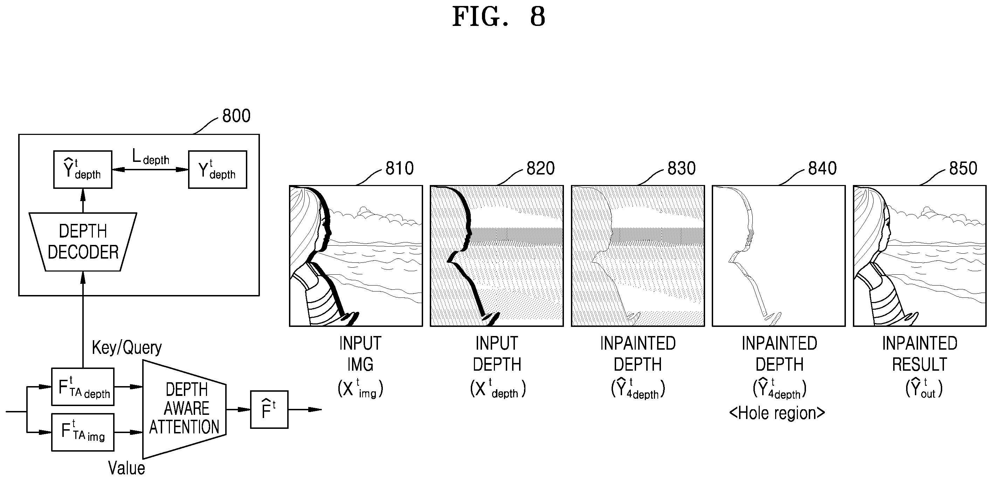

The depth encoder 420 may extract a depth feature based on the input frame, the mask, and the depth frame. The depth feature may include depth information of the input frame, and may include depth information that reconstructs a hole region corresponding to the mask. In other words, the depth encoder may extract a depth feature based on the input frame, the mask, and the depth frame, and may generate feature values such that the depth feature also includes depth information corresponding to the hole region. In this case, when the depth frame is reconstructed by inputting the depth feature to the depth decoder, a depth frame with the filled hole region may be generated. A detailed description of the depth feature is further described with reference to FIG. 8. The image feature and the depth feature may be transferred to the alignment module 430.

In video inpainting, the alignment module 430 may perform alignment of a feature (an image feature and a depth feature) of a previous frame with a feature (an image feature and a depth feature) of a current frame to maintain temporal consistency. The alignment module 430 may calculate an aligned new feature value using, for example, an attention mechanism.

The inpainting module 440 may reconstruct the pixel information by referring to the background area in consideration of the depth information when generating the pixel information of the occlusion region behind the object. The inpainting module 430 may calculate a new inpainted feature value by using, for example, an attention mechanism.

The image decoder 450 may generate an output frame by transforming the output feature. The output frame may be an inpainted image in which a region (hole region) to be reconstructed of the input frame is filled with new pixels.

In an embodiment, the electronic device may generate training data for training the inpainting model 400. The electronic device may train the inpainting model 400 by generating training data including a ground truth image, a mask indicating the occlusion region, and a masked image. When the training of the inpainting model 400 is completed, the electronic device may reconstruct an image or a video using the inpainting model. For example, the electronic device may generate a stereo image or video by obtaining a mono image or video and generating and inpainting an image or video of a different viewpoint.

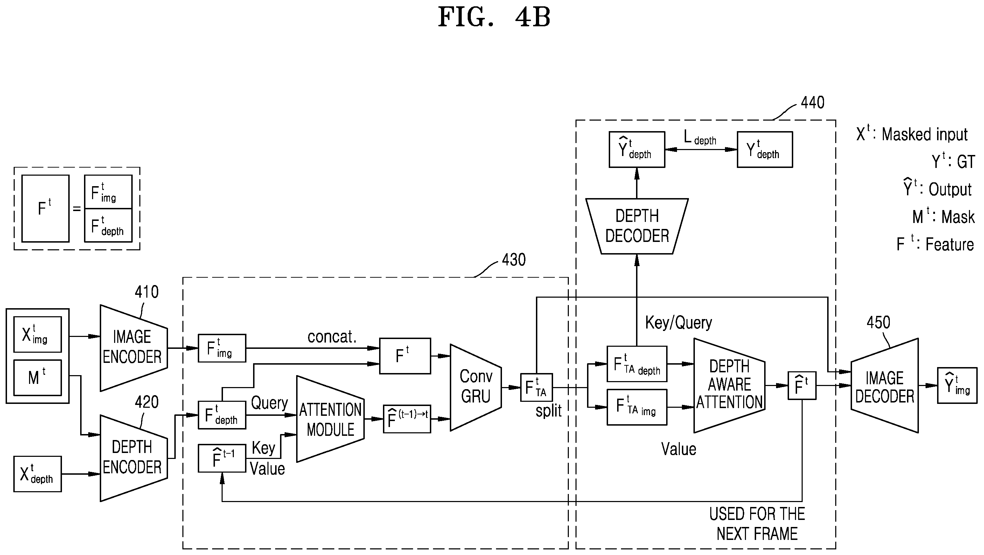

FIG. 4B is a diagram illustrating a detailed architecture of an inpainting model of the present disclosure.

Referring to FIG. 4B, a detailed configuration of an inpainting model and input/output data are illustrated. In describing the present disclosure, it will be assumed that a frame is the t-th frame of a video. Unless otherwise stated, a feature Ft corresponding to the t-th frame includes an image feature Ft_{img} and a depth feature Ft_{depth}.

The image encoder 410 may receive a frame Xt_{img} to be reconstructed and a mask Mt and output the image feature Ft_{img}.

The depth encoder 420 may receive the frame Xt_{img} to be reconstructed, the mask ^{Mt}, and a depth frame X^{t}_{depth} and output the depth feature F^{t}_{depth}.

The image feature F^{t}_{img} and the depth feature F^{t}_{depth} may be concatenated with each other so as to become the input feature Ft corresponding to the t-th frame Xt_{img}.

In video inpainting, the alignment module 430 may perform alignment of an output feature *F̂*^{*t-*1} of the previous frame and the input feature Ft of the current frame to maintain temporal consistency. The alignment module 430 may output an aligned feature Ft_{TA} having a new feature value.

The inpainting module 440 may output an output feature *F̂* of the current frame including pixels reconstructed by using the aligned feature Ft_{TA}. The inpainting module 440 may calculate feature values of an aligned image feature F^{t}_{TA_img} based on the aligned depth feature F^{t}_{TA_depth}. As a result, the output feature *F̂* may include reconstructed pixel information. Here, the aligned depth feature F^{t}_{TA_depth} may include reconstructed depth information. The reconstructed depth information of the aligned depth feature F^{t}_{TA_depth} may be evaluated by an output depth frame *Ŷ^{t}_{depth}* in which the depth feature F^{t}_{TA_depth} is reconstructed into a depth image by the depth decoder 442. The inpainting model may include the reconstructed depth information when the depth encoder 420 outputs the depth feature F^{t}_{depth}, based on a loss L_{depth} between the output depth frame *Ŷ^{t}_{depth}* and the ground truth depth frame Y^{t}_{depth}.

The image decoder 450 may transform the output feature *F̂* to generate an output frame *Ŷ^{t}_{img}.* The output frame *Ŷ^{t}_{img}* may be an inpainted image in which a region (hole region) to be reconstructed of the frame X^{t}_{img}, which is the input frame, is filled with new pixels.

FIG. 5 is a diagram for describing an operation, performed by an electronic device, of aligning a current frame with reference to a previous frame, according to an embodiment of the present disclosure.

In an embodiment, an alignment module 500 of an inpainting model may include an attention module 510 and a convolutional gated recurrent unit (Conv GRU) 520.

In video inpainting, it is important to maintain temporal consistency between a reconstructed frame and a previous frame. The electronic device may use information of a previous frame when reconstructing a current frame in order to secure temporal consistency. When the electronic device attempts to reconstruct the current frame by referring to the previous frame, temporal alignment between the previous frame and the current frame is necessary. In addition, for the temporal alignment, spatial alignment of the previous frame is necessary so that spatial coordinates between frames are not shifted. To this end, the attention module 510 and the Conv GRU 520 of the alignment module 510 may be used.

The attention module 510 may perform an inter-feature alignment based on an attention mechanism. The attention module 510 may output an aligned output feature *F̂*^{(*t-*1)→*t*} of the previous frame by using the depth feature F^{t}_{depth} and the output feature *F̂*^{*t-*1} of the previous frame as inputs. The aligned output feature *F̂*^{(*t-*1)→*t*} of the previous frame may mean a feature in which spatial coordinates are matched by spatially aligning the output feature *F̂*^{*t-*1} of the t-1th frame that is the previous frame, with the t-th frame that is the current frame.

The attention module 510 may spatially align the output feature *F̂*^{*t-*1} of the previous frame and may obtain the output feature *F̂*^{(*t-*1)→*t*} of the previous frame that is (spatially) aligned. As the spatial alignment is performed by the attention module 510, when the Conv GRU 520 aligns the current frame with reference to the previous frame for temporal consistency, an abnormal phenomenon (e.g., a frame afterimage etc.) that may occur due to a deviation in spatial coordinates may be removed.

The Conv GRU 520 may obtain the temporally aligned input feature F^{t}_{TA} based on the aligned output feature *F̂*^{(*t-*1)→*t*} of the previous frame and the input feature F^{t} of the current frame. A convolution layer of the Conv GRU 520 may perform a convolution operation on a feature provided as an input, and a gate recurrent unit (GRU) of the Conv GRU 520 may receive an output of the convolution operation as an input and update an occlusion state. The GRU may obtain the temporally aligned input feature F^{t}_{TA}, which is a final output, based on the occlusion state. The temporally aligned input feature F^{t}_{TA} may include a temporally aligned image feature F^{t}_{TA_img} and a temporally aligned depth feature F^{t}_{TA_depth}.

When the spatial alignment and the temporal alignment of the feature are completed, the alignment module 500 may transfer the aligned feature to the inpainting module.

Meanwhile, in describing FIG. 5, for convenience of description, a case in which the previous frame is the previous frame t-1 of the current frame t has been described as an example, but the embodiment of the present disclosure is not limited to the above-described example. For example, the previous frame may be a previous frame t-n that precedes the current frame t by a predetermined number.

FIG. 6 is a diagram for describing an operation, performed by an electronic device, of aligning a current frame with reference to a previous frame, according to an embodiment of the present disclosure.

In an embodiment, the attention module of the inpainting model may perform an inter-feature alignment based on an attention mechanism. The attention module may spatially align the output feature *F̂*^{*t-*1} of the previous frame to obtain the aligned output feature *F̂*^{(*t-*1)→*t*} of the previous frame.

In the operation of the attention module, the depth feature F^{t}_{depth} of the current frame corresponds to a query, a depth feature *F̂*^{*t-*1}*_{depth}* of the previous frame corresponds to a key, and an image feature *F̂*^{*t-*1}*_{img}* of the previous frame corresponds to a value. In this case, the attention module may perform preprocessing of unfolding a feature in the form of a sequence in a window form.

The attention module may calculate a similarity between the query and the key. The attention module may calculate a similarity between the depth feature F^{t}_{depth} of the current frame and the depth feature *F̂*^{*t-*1}*_{depth}* of the previous frame within a range r. Here, r is a parameter for setting a range for similarity calculation, and means that the movement of an object and/or a camera is within the range r in a feature space. The similarity calculation may use, for example, a cosine similarity method, but is not limited thereto.

The attention module may calculate an alignment weight, which is a weight for alignment, by applying a softmax function to the calculated similarity. The weight calculated within the range r has a higher weight value as the similarity between *F̂*^{*t-*1}*_{depth}* and F^{t}_{depth} increases.

The attention module may apply a weight to the value. The attention module may obtain an image feature *F̂*^{(*t-*1)→}*^{t}_{img}*, in which the image feature *F̂*^{*t-*1}*_{img}* of the **previous** frame is aligned to match the spatial coordinates of the current frame, by applying the alignment weight to the image feature *F̂*^{*t-*1}*_{img}* of the previous frame.

Meanwhile, unlike a general attention mechanism, the attention module may apply the weight not only to the value but also to the key. The attention module may obtain the depth feature *F̂*^{*t-*1}*_{depth}* aligned with spatial coordinates of the current frame by applying the weights to the depth feature *F̂*^{*t-*1}*_{depth}* of the previous frame *F̂*^{(*t-*1)→}*^{t}_{depth}.* The aligned depth feature *F̂*^{(*t-*1)→}*^{t}_{depth}* may be concatenated with the aligned image feature *F̂*^{(*t-*1)→}*^{t}_{img}* to constitute the aligned feature *F̂*^{(*t-*1)→*t*}. The aligned features *F̂*^{(*t-*1)→*t*} may be used in the inpainting process of the inpainting module.

FIG. 7 is a diagram illustrating an operation, performed by an electronic device, of inpainting an image, according to an embodiment of the present disclosure.

In an embodiment, an inpainting module 700 of an inpainting model may include a depth-aware attention module 710 and a depth decoder 720.

The inpainting module 700 may receive the aligned input feature F^{t}_{TA} from the alignment module. The aligned input feature F^{t}_{TA} may be split into the aligned depth feature F^{t}_{TA_depth} and the aligned image feature F^{t}_{TA_img}. The aligned depth feature F^{t}_{TA_depth} may include reconstructed depth information. The reconstructed depth information of the aligned depth feature F^{t}_{TA_depth} may be verified by the output depth frame ${\hat{{Y}^{t}}}_{depth}$ by reconstructing the depth feature F^{t}_{TA_depth} into a depth image by the depth decoder 720. The inpainting model may include the reconstructed depth information when outputting the depth feature F^{t}_{depth}, based on the loss L_{depth} between the output depth frame ${\hat{{Y}^{t}}}_{depth}$ and the ground truth depth frame Y^{t}_{depth}.

The depth-aware attention module 710 may generate the output feature *F̂^{t}* by calculating feature values of the aligned image feature F^{t}_{TA_depth}, based on the reconstructed depth information of the aligned depth feature F^{t}_{TA_img}.

The image decoder may generate the output frame ${\hat{{Y}^{t}}}_{img}$ by using at least one of the aligned image feature F^{t}_{TA_img} of the aligned input feature F^{t}_{TA} and the image feature ${\hat{{F}^{t}}}_{img}$ of the output feature *F̂^{t}*. The output frame ${\hat{{Y}^{t}}}_{img}$ may be an inpainted image in which a region (hole region) of the frame Xt_{img} to be reconstructed, which is the input frame, is filled with new pixels.

FIG. 8 is a diagram for describing a depth feature generated by an electronic device, according to an embodiment of the present disclosure.

Referring to FIG. 8, an input image 810 is an image to be reconstructed including a hole region. In addition, an input depth image 820 is an image representing depth information of the input image 810, and includes a hole region like the input image 810.

In an embodiment, when the inpainting model generates a depth feature using a depth encoder, the depth feature may include reconstructed depth information. The reconstructed depth information may be filled with depth information such that the hole region of the input depth image 820 becomes a depth of a background area behind the object. When training the inpainting model, the electronic device may train the inpainting model such that the depth encoder generates a depth feature including the reconstructed depth information. When the depth feature is reconstructed by using a depth decoder 800, an inpainted depth image 830 may be generated. The inpainted depth image 830 may refer to a depth image in which the hole region is filled with depth information.

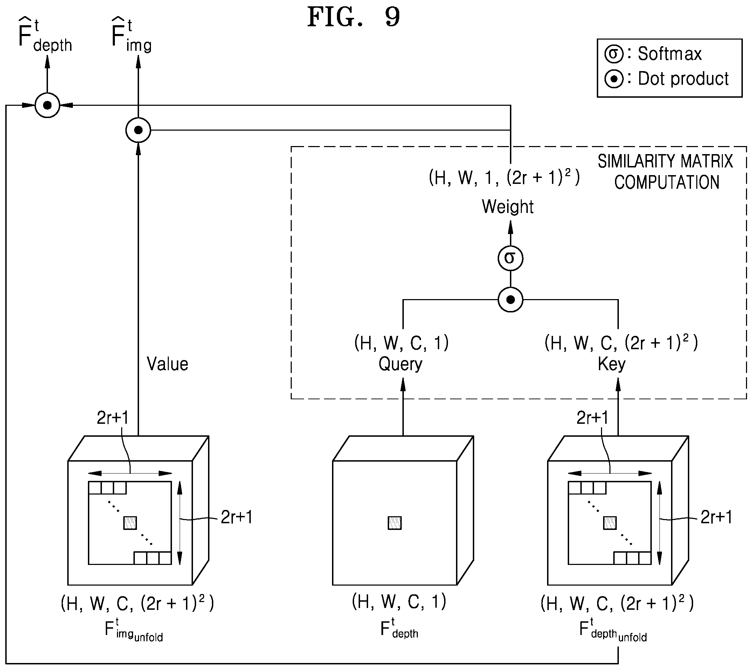

In an embodiment, the inpainting model may inpaint the depth information first, and inpaint the image based on the inpainted depth information. An operation in which the inpainting model performs inpainting based on the depth information will be further described with reference to FIG. 9.

FIG. 9 is a diagram illustrating an operation, performed by an electronic device, of reconstructing pixel information, according to an embodiment of the present disclosure.

In an embodiment, the depth-aware attention module of the inpainting model may calculate a weight for image inpainting based on an attention mechanism. The depth-aware attention module may reconstruct pixel information based on the reconstructed depth information included in the depth feature.

In an operation of the depth-aware attention module, the depth feature F^{t}_{depth} of the current frame corresponds to a key and a query. In addition, the image feature F^{t}_{img} of the current frame corresponds to a value. In this case, the depth-aware attention module may perform preprocessing of unfolding the feature in the form of a sequence in a window form for an operation.

The depth-aware attention module may calculate the similarity between the query and the key. The depth-aware attention module may perform similarity calculation of comparing the depth feature F^{t}_{depth} of the current frame to a portion within a range r. Here, r is a parameter for setting a range for similarity calculation, and means that it is assumed that a range in which occlusion generated by an object occurs is within the maximum range r. The similarity calculation may use, for example, a cosine similarity method, but is not limited thereto.

The depth-aware attention module may calculate an inpaint weight, which is a weight for inpainting, by applying a softmax function to the calculated similarity. The weight calculated according to the similarity within the range r has a higher weight value as the similarity of the depth increases. Accordingly, when the pixel information is reconstructed based on the weight, pixel information having similar depth information among pixels in the range r may be referred to.

The depth-aware attention module may apply the weight to the value. The depth-aware attention module may obtain an output image feature F^{t}_{img} including the reconstructed pixel information, by applying the inpaint weight to the image feature ${\hat{{F}^{t}}}_{img}$*.*

Meanwhile, unlike a general attention mechanism, the depth-aware attention module may apply the weight not only to the value but also to the key. The attention module may obtain an output depth feature ${\hat{{F}^{t}}}_{depth}$ by applying the weight to the depth feature F^{t}_{depth} of the current frame. The output depth feature ${\hat{{F}^{t}}}_{depth}$ may be concatenated to the output image feature ${\hat{{F}^{t}}}_{img}$ to constitute the output feature *F̂^{t}*. The output feature *F̂^{t}* may be used when inpainting a next frame of the current frame. For example, the output feature *F̂^{t}* of the current frame may be used to perform spatial alignment and temporal alignment with the next frame when inpainting the next frame.

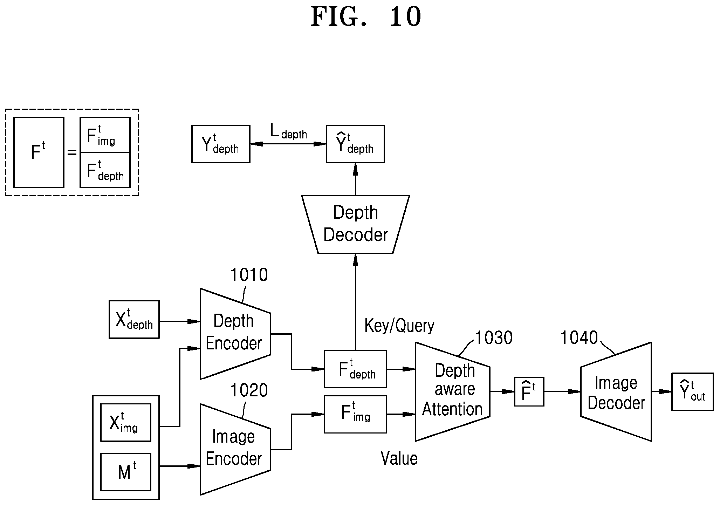

FIG. 10 is a diagram illustrating an operation, performed by an electronic device, of inpainting an image, according to an embodiment of the present disclosure.

In an embodiment, the electronic device may inpaint the image. When the electronic device inpaints an image rather than a video, the above-described operation of the alignment module that performs spatial and temporal alignments with previous frames may be omitted.

A depth encoder 1010 may receive an image X^{t}_{img} to be reconstructed, a mask M^{t}, and a depth image X^{t}_{depth} and output a depth feature F^{t}_{depth}.

An image encoder 1020 may receive the image X^{t}_{img} to be reconstructed and the mask M^{t} and output an image feature F^{t}_{img}.

A depth-aware attention module 1030 may apply an attention mechanism based on depth information. The depth-aware attention module 1030 may receive the depth feature F^{t}_{depth} and the image feature F^{t}_{img} and output an output feature *F̂^{t}*. The output feature may include an output depth feature *F̂^{t}_{depth}* including reconstructed depth information and an output image feature *F̂^{t}_{img}* including reconstructed pixel information.

An image decoder 1040 may transform the output feature *F̂^{t}* to generate an output frame *Ŷ^{t}_{img}*. The output frame *Ŷ^{t}_{img}* may be an inpainted image in which a region (hole region) of the frame X^{t}_{img} to be reconstructed, which is the input frame, is filled with new pixels.

In an embodiment, when the electronic device performs video inpainting, the first frame of the video does not have a previous frame. Accordingly, the first frame of the video inpainting may be performed by the method of image inpainting without the operation of the alignment module as illustrated in FIG. 10.

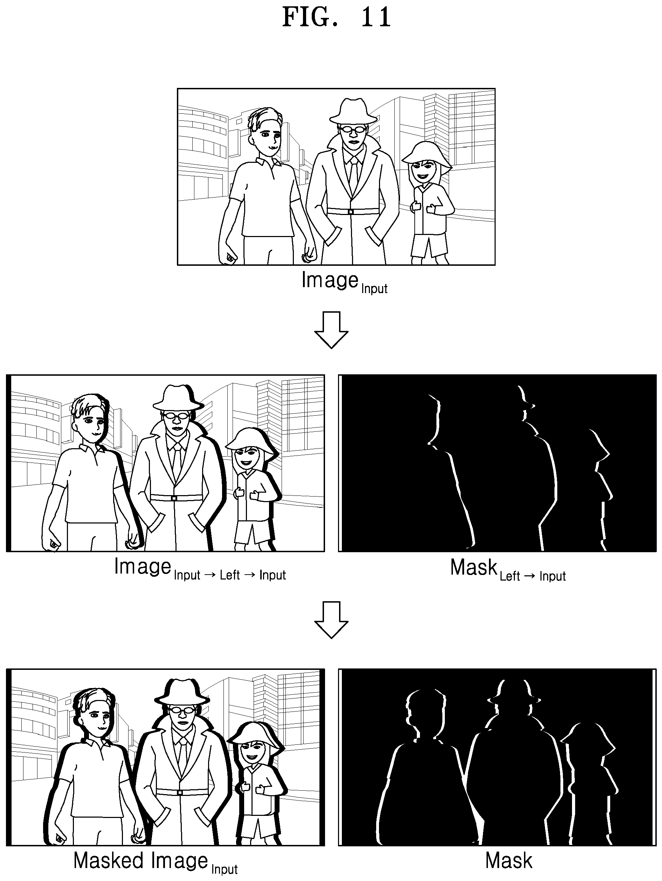

FIG. 11 is a diagram illustrating an operation, performed by an electronic device, of generating training data, according to an embodiment of the present disclosure.

In an embodiment, the electronic device may generate training data for training the inpainting model. In mono-to-stereo image/video conversion, it is difficult to train an inpainting model due to a lack of a stereo dataset having ground truth disparity. In order to solve the data shortage problem described above, the electronic device may directly generate a masked image including a target reconstruction region (hole region) and a mask, and use the same in training data.

In an embodiment, the electronic device may generate an arbitrary disparity map based on the depth information of an input image. As an operation in which the electronic device generates the disparity map based on the depth information has been presented above with reference to FIG. 3, a repeated description thereof will be omitted.

The electronic device may warp and dewarp the input image based on disparity and inverse disparity.

For example, the electronic device may warp the input image to the left based on disparity and then warp the input image to the right (original position) again based on inverse disparity. Accordingly, a hole region may be generated in a right area of the object and a left area of the background in the input image. The electronic device may generate a mask Mask_{Left→Input} indicating the right area of the object and the left area of the background.

In the same manner, although not illustrated in FIG. 11, the electronic device may warp the input image to the right based on the inverse disparity and warp the input image to the left (original position) based on the disparity. Accordingly, a hole region may be generated in a left area of the object and a right area of the background in the input image. The electronic device may generate a mask Mask_{Right→Input} indicating the left area of the object and the right area of the background.

The electronic device may generate a mask by combining the generated masks Mask_{Left→Input} and Mask_{Right→Input} and generate a masked image by applying the mask to the input image. The masked image and the mask may be used as training data of the inpainting model.

In an embodiment, the electronic device may train the inpainting model by using a training dataset. The training dataset may include training data generated by the electronic device and other training data (e.g., data made by a person). The training dataset may include an original image, a masked image, a mask, and a depth image. In the above-described embodiments, the inpainting model used by the electronic device may refer to an inpainting model in a distributed state after training is completed using a training dataset and performance verification and evaluation are completed.

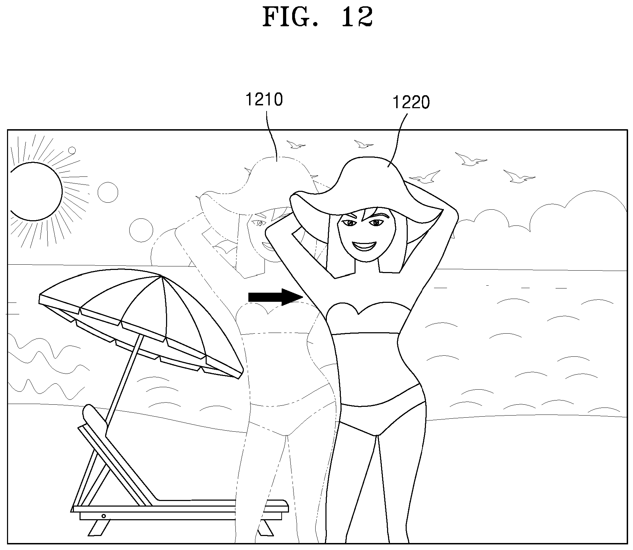

FIG. 12 is a diagram for describing an embodiment in which an electronic device performs an inpainting task, according to an embodiment of the present disclosure.

The above-described embodiments have been described based on an example in which, based on an image or video, the electronic device generates an image or video at a new viewpoint through inpainting or generates a stereo image/video. However, the application of the inpainting method of the present disclosure is not limited thereto.

In an embodiment, the electronic device may generate an image or video in which the position of an object is moved in the image or video. For example, the electronic device may generate an image or video in which the object is moved from a first position 1210 to a second portion 1220.

The electronic device may receive a user input for selecting an object in an image. The user input may include, for example, various types of inputs for specifying an object, such as a drag, a touch, a lasso input, a voice input, and the like. Alternatively, the electronic device may provide a function of automatically detecting a separable object in an image and allowing a user to select the object.

The electronic device may receive a user input for editing the selected object in the image. The user input may include, for example, a drag input for moving an object and/or changing the size of an object, a voice input indicating a movement direction of an object, a movement distance, or a size change, a text input, and the like, but is not limited thereto.

When an object is specified in an image and a final position to which the selected object is moved is specified, the electronic device may generate an image to be reconstructed by modifying the image. In the image to be reconstructed, the object may be moved to another position corresponding to the user input or the size of the object may be changed, and the position of the existing object may be changed to the hole region.

The electronic device may inpaint an image to be reconstructed by using the inpainting model. In this case, as the hole region is an occlusion region that is occluded by the object, the inpainting model may allow pixels in the background area to be referenced for inpainting by using the depth information. In the operation of the inpainting model for the image, while the operation of the alignment module may be omitted, only the operation of the inpainting module may be included. As the detailed description of the image inpainting has been presented above, a repeated description thereof will be omitted.

In an embodiment, for frames of a video, the electronic device may generate frames to be reconstructed by modifying the frames of the video. For example, the electronic device may receive a user input for changing the size and/or position of the object with respect to the first frame of the video, and may generate an initial frame to be reconstructed including the hole region. The electronic device may generate subsequent frames to be reconstructed by changing the subsequent frames based on the initial frame to be reconstructed.

The electronic device may inpaint the frames to be reconstructed by using the inpainting model. In the operation of the inpainting model for the video, the operation of the alignment module and the operation of the inpainting module may be included. As the detailed description of the video inpainting has been presented above, a repeated description thereof will be omitted.

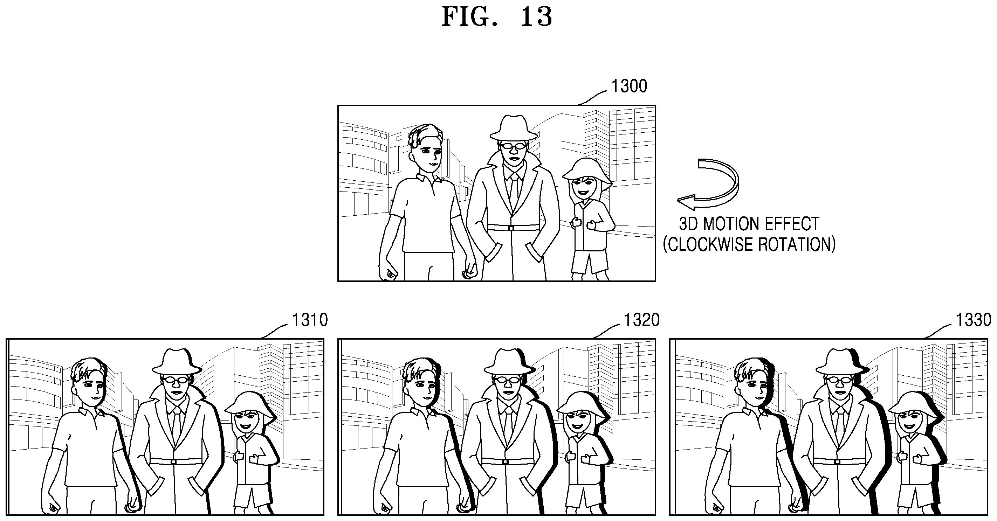

FIG. 13 is a diagram for describing an embodiment in which an electronic device performs an inpainting task, according to an embodiment of the present disclosure.

In an embodiment, the electronic device may generate a 3D motion effect based on an image or a video.

For example, the electronic device may generate a 3D motion effect such as rotating a viewpoint clockwise within the original image based on an original image 1300. Here, the rotation of the viewpoint in the image in the clockwise direction refers to a 3D effect in which a scene captured by a camera rotates in the clockwise direction as the camera moves in the counterclockwise direction from the viewpoint at which the original image 1300 is captured.

In an embodiment, the electronic device may receive a user input for generating a 3D motion effect. The electronic device may receive a user input for adjusting a sense of perspective in a scene or adjusting 3D rotation. Alternatively, the electronic device may provide a function of automatically generating an arbitrary 3D motion effect based on an image.

The electronic device may generate a plurality of images to be reconstructed for generating a 3D motion effect based on the original image 1300. For example, when the viewpoint in the original image 1300 rotates clockwise, the foreground (e.g., objects) needs to move to the left and the background (e.g., buildings) needs to move to the right in the image. The electronic device may generate a plurality of to-be-reconstructed images for gradually representing a 3D rotation effect. For example, a first to-be-reconstructed image 1310, a second to-be-reconstructed image 1320, and a third to-be-reconstructed image 1330 may be generated. In this case, the degree of movement of the object and the background may increase from the first to-be-reconstructed image 1310 to the third to-be-reconstructed image 1330. Accordingly, the size of the hole region representing the occlusion region generated as the object and the background move in different directions may also increase from the first to-be-reconstructed image 1310 to the third to-be-reconstructed image 1330.

The electronic device may inpaint the images to be reconstructed by using the inpainting model. In this case, as the hole region is an occlusion region that is occluded by the object, the inpainting model may allow pixels in the background area to be referenced for inpainting by using the depth information. In the operation of the inpainting model to generate the 3D motion effect, both the operation of the alignment module and the operation of the inpainting module may be included. As the detailed description of the image inpainting has been presented above, a repeated description thereof will be omitted.

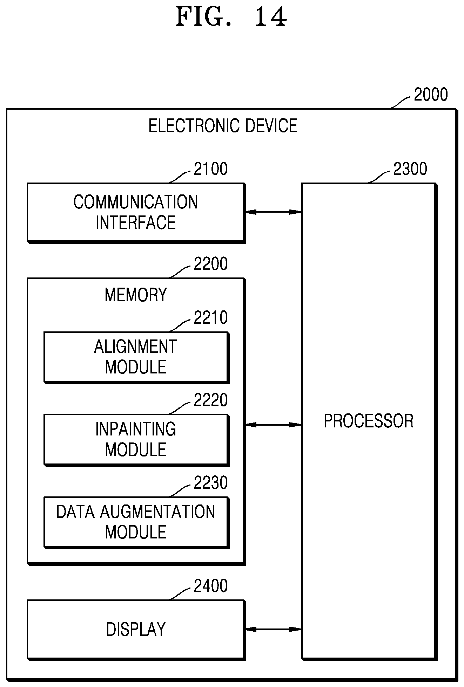

FIG. 14 is a block diagram illustrating a configuration of an electronic device according to an embodiment of the present disclosure.

Referring to FIG. 14, an electronic device 2000 according to an embodiment may include a communication interface 2100, a memory 2200, a processor 2300, and a display 2400.

The communication interface 2100 may perform data communication with other electronic devices under the control of the processor 2300.

The communication interface 2100 may include a communication circuit capable of performing data communication between the electronic device 2000 and another electronic device (e.g., a server 3000) by using at least one of data communication methods including, for example, wired LAN, wireless LAN, Wi-Fi, Bluetooth, ZigBee, Wi-Fi Direct (WFD), IrDA (infrared Data Association), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), and RF communication.

The communication interface 2100 may transmit and receive data for performing image inpainting to and from an external device. For example, modules stored in the memory 2200 may be components of an inpainting model and may be downloaded from an external device (e.g., the server 3000).

The memory 2200 may store instructions, a data structure, and a program code that may be read by the processor 2300. The operations performed by the processor 2300 may be implemented by executing instructions or codes of programs stored in the memory 2200.

The memory 2200 may include a flash memory type memory, a hard disk type memory, a multimedia card micro type memory, a card type memory (e.g., an SD or XD memory), and include a non-volatile memory including at least one of Read-Only Memory (ROM), Electrically Erasable Programmable Read-Only Memory (EEPROM), Programmable Read-Only Memory (PROM), a magnetic memory, a magnetic disk, and an optical disk, and a volatile memory such as Random Access Memory (RAM) or Static Random Access Memory (SRAM).

The memory 2200 may store one or more instructions and/or programs that cause the electronic device 2000 to operate to provide image and/or video inpainting. For example, the memory 2200 may include an alignment module 2210, an inpainting module 2220, and a data augmentation module 2230. Meanwhile, the memory 2200 may further store instructions and/or programs for implementing functions of an image/video inpainting model. For example, the memory 2200 may store an image encoder/decoder, a depth encoder/decoder, and the like.

The processor 2300 may control overall operations of the electronic device 2000. For example, the processor 2300 may control overall operations for the electronic device 2000 to perform inpainting by executing one or more instructions of the programs stored in the memory 2200. The processor 2300 may include one or more processors.

The processor 2300 may be configured as, for example, at least one of a central processing unit (CPU), a microprocessor, a graphic processing unit (GPU), application specific integrated circuits (ASICs), digital signal processors (DSPs), digital signal processing devices (DSPDs), programmable logic devices (PLDs), field programmable gate arrays (FPGAs), an application processor, a neural processing unit, or an artificial intelligence dedicated processor designed in a hardware structure specialized for processing an artificial intelligence model, but is not limited thereto.

The processor 2300 may execute the alignment module 2210 to perform an interframe alignment operation needed in video inpainting. As the description related to the operation of the alignment module 2210 has been presented in the above description of the drawings, a repeated description thereof will be omitted.

The processor 2300 may execute the inpainting module 2220 to perform an image inpainting or video frame inpainting task. As the description related to the operation of the inpainting module 2220 has been presented in the above description of the drawings, a repeated description thereof will be omitted.

The processor 2300 may execute the data augmentation module 2230 to generate training data for training the inpainting model. As the description related to the operation of the data augmentation module 2230 has been presented in the above description of the drawings, a repeated description thereof will be omitted.

Meanwhile, the modules stored in the memory 2200 and executed by the processor 2300 described above are for convenience of description and are not necessarily limited thereto. In order to implement the above-described embodiments, other modules may be added, and some modules may be omitted. In addition, one module may be divided into a plurality of modules distinguished according to detailed functions, and some of the above-described modules may be combined and implemented as one module.

When the method according to an embodiment of the present disclosure includes a plurality of operations, the plurality of operations may be performed by one processor 2300 or may be performed by a plurality of processors 2300. For example, when a first operation, a second operation, and a third operation are performed by a method according to an embodiment, all of the first operation, the second operation, and the third operation may be performed by a first processor, or the first operation and the second operation may be performed by a first processor (e.g., a general-purpose processor) and the third operation may be performed by a second processor (e.g., an artificial intelligence dedicated processor). Here, in the artificial intelligence dedicated processor which is an example of the second processor, operations for training/inference of the artificial intelligence model may be performed. However, embodiments of the present disclosure are not limited thereto.

The one or more processors 2300 according to the present disclosure may be implemented as a single-core processor or a multi-core processor.

When the method according to an embodiment of the present disclosure includes a plurality of operations, the plurality of operations may be performed by one core, or may be performed by a plurality of cores included in the one or more processors 2300.

The display 2400 may output an image signal to a screen of the electronic device 2000 under the control of the processor 2300. For example, the display 2400 may output, on the screen, an image signal generated as the electronic device 2000 performs inpainting, such as an original image, an inpainted image, a result of transforming a viewpoint of an image, a result of moving an object in an image, a 3D motion effect, a stereo video, and the like. The display 2400 may include a touch panel. The touch panel may include one or more touch sensors that sense a touch input. In an embodiment, a prompt may be a text input entered through a touch panel.

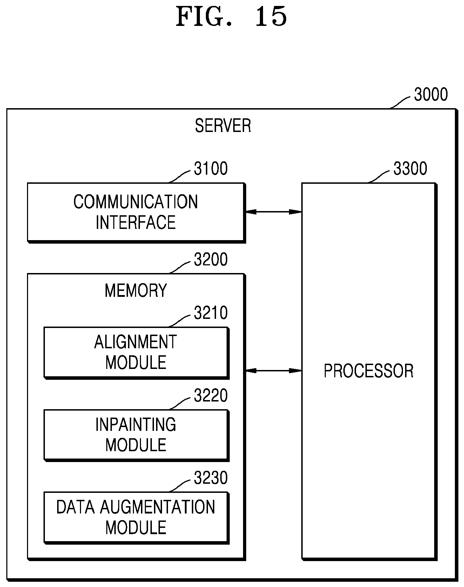

FIG. 15 is a block diagram illustrating a configuration of a server according to an embodiment of the present disclosure.

According to an embodiment of the present disclosure, the above-described operations of the electronic device 2000 may be performed by the server 3000. The server 3000 may include a communication interface 3100, a memory 3200, and a processor 3300. The server 3000 may be a computing device, which exhibits higher performance than the electronic device 2000 and is capable of processing complex operations and tasks using large-scale data, such as training, inference, management, distribution, and operation of an inpainting model.

The communication interface 3100 may include a communication circuit capable of performing data communication between the server 3000 and another electronic device (e.g., the electronic device 2000) by using at least one of data communication methods including, for example, wired LAN, wireless LAN, Wi-Fi, Bluetooth, ZigBee, Wi-Fi Direct (WFD), IrDA (infrared Data Association), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), and RF communication.

The communication interface 3100 may transmit and receive data for inpainting to and from the electronic device 2000 under the control of the processor 3300. For example, the server 3000 may receive an inpainting request from the electronic device 2000 through the communication interface 3100, and may transmit an inpainting result to the electronic device 2000.

The memory 3200 may store one or more instructions and/or programs that cause the server 3000 to operate to provide image and/or video inpainting. For example, the memory 3200 may include an alignment module 3210, an inpainting module 3220, and a data augmentation module 3230. Meanwhile, the memory 3200 may further store instructions and/or programs for implementing functions of the image/video inpainting model. For example, the memory 3200 may store an image encoder/decoder, a depth encoder/decoder, and the like.

The processor 3300 may control overall operations of the server 3000. For example, the processor 3300 may control overall operations for the server 3000 to perform inpainting by executing one or more instructions of the programs stored in the memory 3200. The processors 3300 may include one or more processors.

The processor 3300 may be configured as, for example, at least one of a central processing unit (CPU), a microprocessor, a graphic processing unit (GPU), application specific integrated circuits (ASICs), digital signal processors (DSPs), digital signal processing devices (DSPDs), programmable logic devices (PLDs), field programmable gate arrays (FPGAs), an application processor, a neural processing unit, or an artificial intelligence dedicated processor designed in a hardware structure specialized for processing an artificial intelligence model, but is not limited thereto.

The processor 3300 may perform the inpainting task by executing modules stored in the memory. As this has been described in the above description of the drawings, a repeated description thereof will be omitted.

The present disclosure relates to a method, an electronic device, and a server for inpainting an image and/or a video. The present disclosure relates to an inpainting method for reconstructing an occlusion region by an object based on depth information. The technical problems to be solved in the present disclosure are not limited to those mentioned above, and other technical problems not mentioned will be clearly understood by those skilled in the art to which the present disclosure pertains from the description of the present specification.

According to an aspect of the present disclosure, a method, performed by an electronic device, of inpainting a video may be provided.

The method may include extracting an input feature including an image feature and a depth feature based on a first frame to be reconstructed, a mask, and a depth frame.

The method may include selecting a second frame that is a frame preceding the first frame and is associated with the first frame.

The method may include aligning an input feature of the first frame with an output feature of the second frame based on depth features of the first frame and the second frame.

The method may include obtaining an output feature by modifying an image feature based on a depth feature of the aligned input feature.

The method may include generating a reconstructed frame based on the output feature.

The method may include estimating a depth of an original frame.

The method may include obtaining a first frame to be reconstructed by transforming a viewpoint of the original frame based on depth information of the original frame.

The extracting of the input feature may include extracting an image feature by using the first frame and a mask.

The extracting of the input feature may include extracting a depth feature by using the first frame, a mask, and a depth frame.

The depth feature may include depth information that reconstructs a hole region corresponding to the mask in the depth frame.

The aligning of the input feature of the first frame with the output feature of the second frame may include spatially aligning the output feature of the second frame with the first frame based on the depth feature of the second frame and the depth feature of the first frame.

The aligning of the input feature of the first frame with the output feature of the second frame may include temporally aligning the aligned output feature of the second frame and the input feature of the first frame.

The spatial aligning of the output feature of the second frame with the first frame may include calculating a similarity between a specific pixel of the depth feature of the first frame and neighboring pixels of the depth feature of the second frame.

The spatial aligning of the output feature of the second frame with the first frame may include calculating an alignment weight based on the similarity.

The spatial aligning of the output feature of the second frame with the first frame may include applying the alignment weight to the image feature of the second frame.

The obtaining of the output feature may include calculating a similarity between a specific pixel and neighboring pixels with respect to a depth feature of the aligned input feature.

The obtaining of the output feature may include calculating an inpaint weight based on the similarity.

The obtaining of the output feature may include applying the inpaint weight to the image feature of the first frame.

The method may include generating training data for video inpainting.

The generating of the training data may include generating a mask indicating an occlusion region by an object in an image by warping and dewarping the image.

The generating of the training data may include generating the training data including the ground truth image, a mask indicating the occlusion region, and a masked image.

The method may include generating a stereo video including the original frame and the reconstructed frame.

The method may include generating a video including a 3D motion effect by generating a plurality of reconstructed frames.

According to an aspect of the present disclosure, an electronic device performing inpainting may be provided. The electronic device may include: a memory storing one or more instructions; and one or more processors configured to execute the one or more instructions stored in the memory.

The one or more processors may be further configured to execute the one or more instructions to extract an input feature including an image feature and a depth feature based on a first frame to be reconstructed, a mask, and a depth frame.

The one or more processors may be further configured to execute the one or more instructions to select a second frame that is a frame preceding the first frame and is associated with the first frame.

The one or more processors may be further configured to execute the one or more instructions to align an input feature of the first frame with an output feature of the second frame based on depth features of the first frame and the second frame.

The one or more processors may be further configured to execute the one or more instructions to obtain an output feature by modifying an image feature based on a depth feature of the aligned input feature.

The one or more processors may be further configured to execute the one or more instructions to generate a reconstructed frame based on the output feature.

The one or more processors may be further configured to execute the one or more instructions to estimate a depth of an original frame.

The one or more processors may be further configured to execute the one or more instructions to obtain the first frame to be reconstructed by transforming a viewpoint of the original frame based on the depth information of the original frame.

The one or more processors may be further configured to execute the one or more instructions to extract an image feature by using the first frame and a mask.

The one or more processors may be further configured to execute the one or more instructions to extract a depth feature by using the first frame, a mask, and a depth frame.

The depth feature may include depth information that reconstructs a hole region corresponding to the mask in the depth frame.

The one or more processors may be further configured to execute the one or more instructions to spatially align an output feature of the second frame with the first frame based on a depth feature of the second frame and a depth feature of the first frame.

The one or more processors may be further configured to execute the one or more instructions to temporally align the aligned output feature of the second frame and the input feature of the first frame.

The one or more processors may be further configured to execute the one or more instructions to calculate a similarity between a specific pixel of a depth feature of the first frame and neighboring pixels of a depth feature of the second frame.

The one or more processors may be further configured to execute the one or more instructions to calculate an alignment weight based on the similarity.

The one or more processors may be further configured to execute the one or more instructions to apply the alignment weight to the image feature of the second frame.

The one or more processors may be further configured to execute the one or more instructions to calculate a similarity between a specific pixel and neighboring pixels with respect to a depth feature of the aligned input feature.

The one or more processors may be further configured to execute the one or more instructions to calculate an inpaint weight based on the similarity.

The one or more processors may be further configured to execute the one or more instructions to apply the inpaint weight to the image feature of the first frame.

The one or more processors may be further configured to execute the one or more instructions to generate training data for video inpainting.

The one or more processors may be further configured to execute the one or more instructions to generate a mask indicating an occlusion region by an object in an image by warping and dewarping the image.

The one or more processors may be further configured to execute the one or more instructions to generate the training data including the ground truth image, a mask indicating the occlusion region, and a masked image.

The one or more processors may be further configured to execute the one or more instructions to generate a stereo video including the original frame and the reconstructed frame.

The one or more processors may be further configured to execute the one or more instructions to generate a stereo video including the original frame and the reconstructed frame and generate a video including a 3D motion effect by generating a plurality of reconstructed frames.

Meanwhile, the embodiments of the present disclosure may also be implemented in the form of a recording medium including instructions executable by a computer, such as a program module executed by a computer. A computer-readable medium may be any available medium that may be accessed by a computer, and includes all of volatile and nonvolatile media and removable and non-removable media. In addition, the computer-readable medium may include a computer storage medium and a communication medium. The computer storage medium includes all of volatile and nonvolatile media and removable and non-removable media implemented in any method or technology for storage of information such as computer-readable instructions, data structures, program modules or other data. The communication medium may typically include computer-readable instructions, data structures, or other data of a modulated data signal such as a program module.

In addition, the computer-readable storage medium may be provided in the form of a non-transitory storage medium. Here, the term "non-transitory storage medium" is a tangible device and merely means that it does not include a signal (e.g., an electromagnetic wave), and this term does not distinguish between a case where data is semi-permanently stored in the storage medium and a case where data is temporarily stored in the storage medium. For example, the "non-transitory storage medium" may include a buffer in which data is temporarily stored.

According to an embodiment, methods according to various embodiments disclosed herein may be included and provided in computer program products. The computer program products may be traded between sellers and buyers as goods. The computer program product may be distributed in the form of a machine-readable storage medium (e.g., a compact disc read only memory (CD-ROM)), or may be distributed (e.g., downloaded or uploaded) online through an application store or directly between two user devices (e.g., smartphones). In the case of online distribution, at least a portion of a computer program product (e.g., a downloadable app) may be at least temporarily stored in a machine-readable storage medium such as a memory of a manufacturer's server, a server of an application store, or a relay server, or may be temporarily generated.

The descriptions of the present disclosure described above are provided for purposes of illustration, and those of ordinary skill in the art to which the present disclosure pertains will understand that it may be easily modified into other specific forms without changing the technical spirit or essential features of the present disclosure. Therefore, it should be understood that the embodiments described above are exemplary and not restrictive in all aspects. For example, each component described as being a single type may be distributed and implemented, and similarly, the components described as being distributed may also be implemented in a combined form.

The scope of the present disclosure is indicated by the claims to be described later rather than the detailed description, and it should be interpreted that all changes or modifications derived from the meaning and scope of the claims and the equivalent concept thereof are included in the scope of the present disclosure.

## Claims

1. A video inpainting method, comprising:
extracting an input feature including an image feature and a depth feature, based on a first frame to be reconstructed, a mask, and a depth frame;
selecting a second frame that is a frame preceding the first frame and is associated with the first frame;
aligning an input feature of the first frame with an output feature of the second frame, based on depth features of the first frame and the second frame;
obtaining an output feature by modifying an image feature based on a depth feature of the aligned input feature; and
generating a reconstructed frame based on the output feature.

2. The method of claim 1, further comprising:
estimating a depth of an original frame; and
obtaining the first frame to be reconstructed by transforming a viewpoint of the original frame based on depth information of the original frame.

3. The method of claim 1, wherein
the extracting of the input feature comprises:
extracting an image feature by using the first frame and a mask; and
extracting a depth feature by using the first frame, the mask, and the depth frame.

4. The method of claim 3, wherein
the depth feature includes depth information that reconstructs a hole region corresponding to the mask in the depth frame.

5. The method of claim 4, wherein
the aligning of the input feature of the first frame with the output feature of the second frame comprises:
spatially aligning the output feature of the second frame with the first frame based on the depth feature of the second frame and the depth feature of the first frame; and
temporally aligning an aligned output feature of the second frame and the input feature of the first frame.

6. The method of claim 5, wherein
the spatial aligning of the output feature of the second frame with the first frame comprises:
calculating a similarity between a specific pixel of the depth feature of the first frame and neighboring pixels of the depth feature of the second frame;
calculating an alignment weight based on the similarity; and
applying the alignment weight to the image feature of the second frame.

7. The method of claim 4, wherein
the obtaining of the output feature comprises:
calculating a similarity between a specific pixel and neighboring pixels with respect to the depth feature of the aligned input feature;
calculating an inpaint weight based on the similarity; and
applying the inpaint weight to the image feature of the first frame.

8. An electronic device, comprising:
a memory storing one or more instructions; and
one or more processors configured to execute the one or more instructions stored in the memory,
wherein the one or more processors are further configured to execute the one or more instructions to:
extract an input feature including an image feature and a depth feature, based on a first frame to be reconstructed, a mask, and a depth frame;
select a second frame that is a frame preceding the first frame and is associated with the first frame;
align an input feature of the first frame with an output feature of the second frame, based on depth features of the first frame and the second frame;
obtain an output feature by modifying an image feature based on a depth feature of the aligned input feature; and
generate a reconstructed frame based on the output feature.

9. The electronic device of claim 8, wherein
the one or more processors are further configured to execute the one or more instructions to:
estimate a depth of an original frame; and
obtain the first frame to be reconstructed by transforming a viewpoint of the original frame based on depth information of the original frame.

10. The electronic device of claim 8, wherein
the one or more processors are further configured to execute the one or more instructions to:
extract an image feature by using the first frame and a mask; and
extract a depth feature by using the first frame, the mask, and the depth frame.

11. The electronic device of claim 10, wherein
the depth feature includes depth information that reconstructs a hole region corresponding to the mask in the depth frame.

12. The electronic device of claim 11, wherein
the one or more processors are further configured to execute the one or more instructions to:
spatially align the output feature of the second frame with the first frame based on the depth feature of the second frame and the depth feature of the first frame; and
temporally align an aligned output feature of the second frame and the input feature of the first frame.

13. The electronic device of claim 12, wherein
the one or more processors are further configured to execute the one or more instructions to:
calculate a similarity between a specific pixel of the depth feature of the first frame and neighboring pixels of the depth feature of the second frame;
calculate an alignment weight based on the similarity; and
apply the alignment weight to the image feature of the second frame.

14. The electronic device of claim 11, wherein
the one or more processors are further configured to execute the one or more instructions to:
calculate a similarity between a specific pixel and neighboring pixels with respect to the depth feature of the aligned input feature;
calculate an inpaint weight based on the similarity; and
apply the inpaint weight to the image feature of the first frame.

15. A computer-readable recording medium having recorded thereon a program for executing, on a computer, the method of any one of claims 1 to 7.
